## Europäisches Patentamt

## European Patent Office

## Office européen des brevets

(11) Veröffentlichungsnummer : **0 160 193**
**B1**

(12) **EUROPÄISCHE PATENTSCHRIFT**

(45) Veröffentlichungstag der Patentschrift :
21.12.88

(51) Int. Cl.⁴ : **C 02 F  3/20**

(21) Anmeldenummer : **85102945.4**

(22) Anmeldetag : **14.03.85**

(54) Begasungsgerät.

(30) Priorität : **21.03.84 DE 3410267**

(43) Veröffentlichungstag der Anmeldung :
**06.11.85 Patentblatt 85/45**

(45) Bekanntmachung des Hinweises auf die Patenterteilung : **21.12.88 Patentblatt 88/51**

(84) Benannte Vertragsstaaten :
**FR IT NL**

(56) Entgegenhaltungen :
**EP--A-- 0 028 728**
**DE--B-- 1 254 600**

(73) Patentinhaber : **Schneider, Norbert**
**Holbeinstrasse 13**
**D-5657 Haan 1 (DE)**

(72) Erfinder : **Schneider, Norbert**
**Holbeinstrasse 13**
**D-5657 Haan 1 (DE)**

(74) Vertreter : **König, Reimar, Dr.-Ing. et al**
**Patentanwälte Dr.-Ing. Reimar König Dipl.-Ing. Klaus**
**Bergen Wilhelm-Tell-Strasse 14 Postfach 260162**
**D-4000 Düsseldorf 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Begasungsgerät mit den Merkmalen des Oberbegriffs des Anspruchs 1.

Gemäß EP-A-28728 ist ein Begasungsgerät mit perforierter Membrane bekannt, das einen außenliegenden Stegrahmen aufweist, um beim Betrieb eine unzuträglich große Auswölbung der Membran zu vermeiden.

Ein aus der DE-B-1254600 bekanntes Begasungsgerät arbeitet nach Art eines Flatterventils und besteht aus einer tellerförmigen Schale, auf der ein elastischer Deckel mittig mit Hilfe eines Bolzens verankert ist. Der Deckel ist geschlossen und randbeweglich angeordnet, sodaß die Gasblasen peripher austreten.

Bei unter Flüssigkeit angeordneten Begasungsgeräten unterscheidet man zwischen zwei häufig angewandten Grundtypen. Ein rohrförmiger Aufbau des Begasers wird besonders bei linienförmiger Anordnung bevorzugt, während Dom- oder Tellerformen besser für eine flächige Verteilung im Begasungsbecken geeignet sind.

In jüngster Zeit ist es gelungen, bei rohrförmigem Aufbau der Begasungsgeräte die starren porösen Sinterkörper aus Keramik oder Kunststoff durch elastische Stoffe aus Kautschuk oder Schaumstoff zu ersetzen. Dadurch konnte man der Verstopfungs- und Verkrustungsneigung des Begasungskörpers erfolgreich begegnen.

Bei Dom- oder Tellerformen des Begasungsgerätes sind solche Maßnahmen bis jetzt auf große Schwierigkeiten gestoßen.

Während der gleichmäßige Überdruck des zu verteilenden Gases bei starren Begasungskörpern auch zu einer gleichmäßigen Intensität des Gasdurchtritts über die gesamte Begasungsfläche führt, sind die Verhältnisse bei elastischen Gasverteilungskörpern ganz anders. Hier beginnt der Gasdurchtritt erst bei einer durch den Überdruck des Gases bedingten Dehnung des Materials, wodurch die Perforierung geöffnet wird. Bei rohrförmigem Aufbau ist diese Dehnung an allen Stellen des Begasungskörpers nahezu gleich, was auch zu einer gleichmäßigen Gasungsintensität führt.

Der dom- bzw. tellerförmige Aufbau bewirkt jedoch, daß die Dehnung des elastischen Begasungskörpers im Zentrum am größten ist und nach außen bis zur Einspannung auf Null abnimmt. In einem ähnlichen Verhältnis unterscheidet sich dann auch die Intensität des Gasdurchtrittes durch die poröse oder perforierte Membrane, wodurch die Wirtschaftlichkeit des Stoffübergangs von der Gas- in die Flüssigkeitsphase entscheidend herabgesetzt wird.

Die Aufgabe der Erfindung liegt darin, ein Begasungsgerät mit den Merkmalen des Oberbegriffs so zu verbessern, daß eine weitgehend gleichmäßige Begasungsintensität über die Begasungsfläche entsteht.

Eine weitere Aufgabe der Erfindung besteht darin, bei fehlender Gasbeaufschlagung die Gasdurchtrittsöffnung so zu verschließen, daß keine Flüssigkeit durch eventuell nicht ganz dichte Perforierungen in das Begasungsgerät und somit in die Gaszuführungsrohrleitung dringen kann.

Diese Aufgaben werden erfindungsgemäß dadurch gelöst, daß eine Hubbegrenzung (4, 7 bis 10) an der Membran (5) angebracht ist und die Hubbegrenzung in Verbindung mit einem am Grundkörper (1) befestigten Gegenstück (4) bewirkt, wobei bei unterbrochener Gasbeaufschlagung ein glattes Anliegen der Membran (5) an dem Grundkörper und eine Abdichtung der Luftzuführungsöffnung (2) gewährleistet sind.

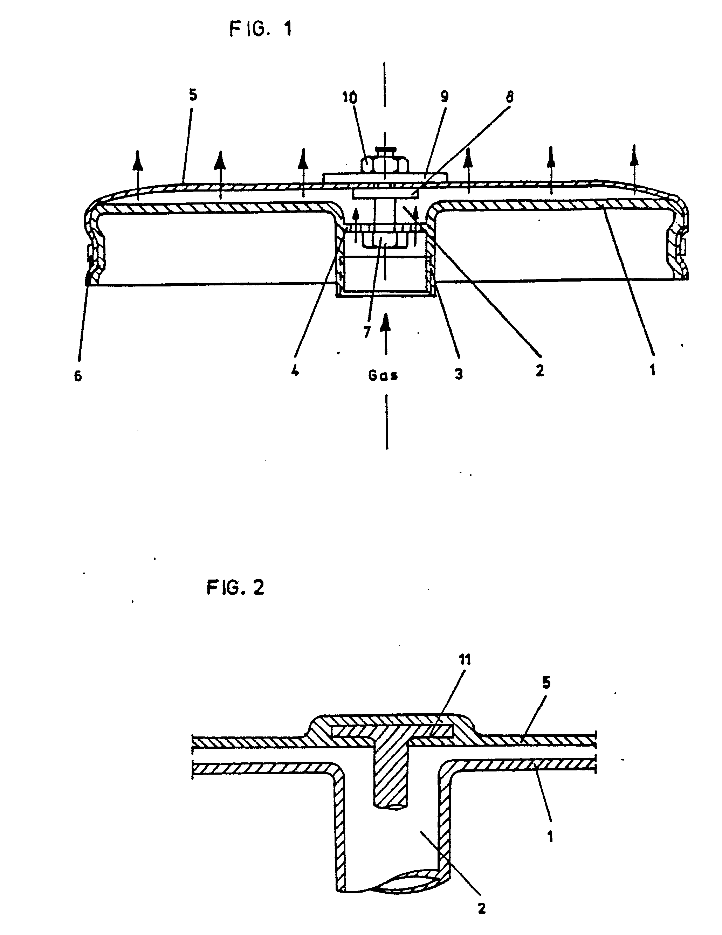

Bevorzugte Ausgestaltungen sowie weitere Vorteile und Einzelheiten der Erfindung sind dem Merkmal der Unteransprüche, der nachfolgenden Beschreibung und der Figuren 1 und 2 zu entnehmen, die in schematischer Darstellung mögliche Ausführungsformen als Beispiele zeigen. Es stellen dar:

Fig. 1 ein Querschnitt eines Begasungsgerätes im Betriebszustand

Fig. 2 Querschnitt eines Ausschnittes eines Begasungsgerätes mit alternativem Aufbau der Abdeckung für die Gasdurchtrittsöffnung und der Befestigung der Hubvorrichtung an der Membrane.

Das in Fig. 1 dargestellte Begasungsgerät ist beim vorliegenden Ausführungsbeispiel für einen Einsatz in einem Belebungsbecken oder dergleichen vorgesehen und wird unter dem Wasserspiegel vorzugsweise gleichmäßig im Becken verteilt und dicht über der Beckensohle angeordnet.

Es liegt im Sinne der Erfindung, das Begasungsgerät auch in einer anderen Flüssigkeit zu verwenden und statt Luft bzw. Luftsauerstoff ein anderes Gas in eine Flüssigkeit einzutragen.

Das Begasungsgerät weist einen tellerförmigen Grundkörper (1) auf, der bevorzugt eine kreisrunde Oberfläche besitzt. Normalerweise wird der Durchmesser des Tellers 150 bis 600 mm betragen.

Der tellerförmige Grundkörper (1) besitzt mindestens eine Gasdurchtrittsöffnung (2), die vorzugsweise in ein Gasanschlußstück (3) übermündet. Über den Grundkörper (1) wird die gasdurchlässige Membrane (5) gespannt und mit Schellenband (6) oder ähnlichem auf der Abkantung des Grundkörpers (1) befestigt. Zum besseren Halt der Membrane (5) kann die Abkantung noch eine Profilierung erhalten.

Im Bereich der Gasdurchtrittsöffnung (2) ist die Membrane (5) zwischen einer Gewindescheibe (8) und einer Scheibe (9) durch Festdrehen der Gewindemutter (10) auf der Maschinenschraube (7) eingespannt.

Der verlängerte Kopf der Schraube (7) ragt in das Gasanschlußstück (3). Die Position des Schraubenkopfes wird nach oben durch einen Anschlag (4) begrenzt. In FIG. 1 ist der Anschlag (4) als Lochscheibe mit Zentralbohrung für den Durchtritt des Schaftes der Schraube (7) sowie Randbohrungen für den Gasdurchtritt ausgebildet.

Im dargestellten Beispiel ist die Gewindescheibe (8) in ihrem Durchmesser kleiner gehalten als die Gasdurchtrittsöffnung (2), um bei unterbrochener Gasbeaufschlagung ein glattes Anliegen der Membrane (5) an den Grundkörper (1) zu gewährleisten.

Die Scheibe (9) hat einen größeren Durchmesser als die Luftdurchtrittsöffnung (2) und unterstützt bei unterbrochener Gasbeaufschlagung die Abdichtungsfunktion der Membrane (5) im Bereich der Luftdurchtrittsöffnung (2). Die Gewindemutter (10) dient der Einspannung der Membrane (5) zwischen den Scheiben (8, 9), wodurch gleichzeitig die Gewindeschraube (7) mit der Membrane (5) verbunden wird.

Die in den beiden letzten Absätzen beschriebene Konstruktion läßt sich eleganter nach FIG. 2 darstellen, wobei allerdings ein erhöhter Herstellungsaufwand für die Membrane (5) entsteht. In FIG. 2 wurden Schraubenschaft, Gewindescheibe, Scheibe und Gewindemutter durch ein Sonderteil (11) ersetzt, bei dem ein Schraubenschaft und eine Scheibe eine Einheit bilden. Die Scheibe des Sonderteils (11) wird in die Gummimembrane (5) eingebettet, so daß bei unterbrochener Gaszuführung die Membrane (5) glatt auf dem Grundkörper (1) aufliegt und die Luftzuführungsöffnung (2) abdichtet.

## Patentansprüche

1. Begasungsgerät zum Einbringen eines Gases in eine Flüssigkeit, insbesondere in ein zu behandelndes Abwasser, aus einem Grundkörper (1) mit mindestens einer Gasdurchtrittsöffnung (2), einer den Grundkörper abdeckenden und auf diesem z. B. mit Schellenband befestigten Membran (5), die durch Perforation oder dergleichen das Gas in die Flüssigkeit austreten läßt, und einer Hubbegrenzung (4, 7 bis 10) für die Membran, dadurch gekennzeichnet, daß eine Hubbegrenzung (4, 7 bis 10) an der Membran (5), bevorzugt in ihrer Mitte, angebracht ist und die Hubbegrenzung in Verbindung mit einem am Grundkörper (1) befestigten Gegenstück (4) bewirkt, wobei bei unterbrochener Gasbeaufschlagung ein glattes Anliegen der Membran (5) an dem Grundkörper und eine Abdichtung der Luftzuführungsöffnung (2) gewährleistet sind.

2. Begasungsgerät nach vorstehendem Anspruch dadurch gekennzeichnet, daß die Membrane (5) im Überdeckungsbereich der Gasdurchtrittsöffnung (2) keine Perforierung oder dergleichen aufweist.

3. Begasungsgerät nach vorstehenden Ansprüchen dadurch gekennzeichnet, daß zum Anbringen der Vorrichtung (7) an die Membrane (5) diese z. B. durch zwei Scheiben (8, 9) eingespannt wird.

4. Begasungsgerät nach einem der vorstehenden Ansprüche dadurch gekennzeichnet, daß der Hub der Membrane (5) zwischen 0,5 und 150 mm fixiert wird.

5. Begasungsgerät nach einem der vorstehenden Ansprüche dadurch gekennzeichnet, daß die Luftzuführungsöffnung (2) durch eine starre Abdeckplatte oder Scheibe (9, 11) überdeckt wird, die auf der Membrane (5) befestigt ist, bzw. in die Membrane eingearbeitet wurde.

6. Begasungsgerät nach einem der vorstehenden Ansprüche dadurch gekennzeichnet, daß bei fehlender Gasbeaufschlagung die Abdeckung der Gaszuführungsöffnung (2) und die Hubbegrenzung eine konstruktive Einheit darstellen.

7. Begasungsgerät nach einem der vorstehenden Ansprüche dadurch gekennzeichnet, daß die Membrane (5) aus Kunstkautschuk hergestellt wird.

8. Begasungsgerät nach einem der vorstehenden Ansprüche dadurch gekennzeichnet, daß die Membrane (5) zwischen 0,5 und 5,0 mm dick ist.

9. Begasungsgerät nach einem der vorstehenden Ansprüche dadurch gekennzeichnet, daß die Membrane (5) schlitzförmig perforiert ist.

10. Begasungsgerät nach einem der vorstehenden Ansprüche dadurch gekennzeichnet, daß die Perforierung auf der Membrane (5) kreisförmig angeordnet ist.

## Claims

1. A gassing apparatus for introducing a gas into a liquid, in particular into an effluent to be treated, comprising a base (1) with at least one opening (2) for the passage of gas, a membrane (5) covering the base and fastened to it, for example by a clamping strip, which allows the gas to pass out into the liquid through perforations or the like, and a means (4, 7 to 10) of restricting the lifting of the membrane, characterised in that a lift-restricting means (4, 7 to 10) is fastened to the membrane (5), preferably in its centre, and the lift-restricting means acts in combination with a counterpart (4) fixed to the base (1), whereby it is ensured that when the gas pressure is interrupted the membrane (5) lies flush with the base and the air supply opening (2) is sealed.

2. A gassing apparatus according to the preceding claim, characterised in that the membrane (5) does not have any perforations or the like in the area covering the gas passage opening (2).

3. A gassing apparatus according to any preceding claim, characterised in that to fix the device (7) to the membrane (5) this is gripped, e.g. by two discs (8, 9).

4. A gassing apparatus according to any one of the preceding claims, characterised in that the lift of the membrane (5) is fixed between 0.5 and 150 mm.

5. A gassing apparatus according to any one of the preceding claims, characterised in that the air supply opening (2) is covered by a rigid cover plate or disc (9, 11) that is fastened to the membrane (5) or is incorporated in the membrane.

6. A gassing apparatus according to any one of the preceding claims, characterised in that when there is no gas pressure the cover of the gas supply opening (2) and the lift-restricting means form a constructional unit.

7. A gassing apparatus according to any one of the preceding claims, characterised in that the membrane (5) is made of synthetic rubber.

8. A gassing apparatus according to any one of the preceding claims, characterised in that the membrane (5) is between 0.5 and 5.0 mm thick.

9. A gassing apparatus according to any one of the preceding claims, characterised in that the membrane (5) is perforated in the form of slits.

10. A gassing apparatus according to any one of the preceding claims, characterised in that the perforations in the membrane (5) are arranged circularly.

**Revendications**

1. Dispositif de gazage destiné à l'injection d'un gaz dans un liquide, notamment dans une eau résiduaire à traiter, comportant un corps principal (1) muni d'au moins une ouverture de passage de gaz (2), une membrane (5) recouvrant le corps principal et fixée sur celui-ci par exemple par un collier en bande, la membrane permettant le passage de gaz dans le liquide grâce à des perforations ou analogue, et une limitation de la course (4, 7 à 10) de la membrane, caractérisé en ce qu'une limitation de course (4, 7 à 10) est agencée sur la membrane (5), de préférence en son centre et en ce que la limitation de course agit en combinaison avec une butée (4) solidaire du corps principal (1), étant garanti que, en cas d'interruption de l'alimentation de gaz, la membrane (5) est accolée contre le corps principal et l'ouverture d'adduction d'air (2) est rendue étanche.

2. Dispositif de gazage selon la revendication précédente, caractérisé en ce que la membrane (5) ne présente pas de perforation ou analogue dans la zone de recouvrement de l'ouverture de passage de gaz (2).

3. Dispositif de gazage selon les revendications précédentes caractérisé en ce que la membrane (5) est serrée par exemple entre deux disques (8, 9), en vue de la fixation du dispositif (7) à ladite membrane.

4. Dispositif de gazage selon l'une des revendications précédentes caractérisé en ce que la course de la membrane (5) est fixée entre 0,5 et 150 mm.

5. Dispositif de gazage selon l'une des revendications précédentes caractérisé en ce que l'ouverture d'alimentation d'air (2) est recouverte par une plaquette rigide ou disque rigide (9, 11) fixé sur la membrane (5) ou logé dans celle-ci.

6. Dispositif de gazage selon l'une des revendications précédentes caractérisé en ce que, lors d'un défaut d'alimentation en gaz, le recouvrement de l'ouverture d'alimentation en gaz (2) et le moyen de limitation de la course constituent une seule pièce.

7. Dispositif de gazage selon l'une des revendications précédentes caractérisé en ce que la membrane (5) est constituée de caoutchouc.

8. Dispositif de gazage, selon l'une des revendications précédentes caractérisé en ce que la membrane (5) présente une épaisseur de 0,5 à 5,0 mm.

9. Dispositif de gazage selon l'une des revendications précédentes caractérisé en ce que la membrane (5) présente des perforations à la manière de fentes.

10. Dispositif de gazage selon l'une des revendications précédentes caractérisé en ce que les perforations sont disposées à la manière d'un cercle sur la membrane (5).

FIG. 1

FIG. 2